Europäisches Patentamt

European Patent Office

Office européen des brevets

(11) Publication number: **0 408 377 A2**

# EUROPEAN PATENT APPLICATION

(21) Application number: 90307668.5

(22) Date of filing: 12.07.90

(51) Int. Cl.⁵: **B01D 35/30**

(30) Priority: **12.07.89 GB 8916057**

(43) Date of publication of application:
**16.01.91 Bulletin 91/03**

(84) Designated Contracting States:
**DE FR IT**

(71) Applicant: **PALL CORPORATION**
**30 Sea Cliff Avenue**
**Glen Cove New York 11542(US)**

(72) Inventor: **Buttery, Roger A.**
**37 Monks Orchard, Petersfield,**
**Hampshire GU32 2JD(GB)**
Inventor: **Rothwell, Charles N.**
**169 Huddersfield Road**
**Halifax West Yorkshire HX3 0AS(GB)**

(74) Representative: **Knott, Stephen Gilbert et al**
**MATHISEN, MACARA & CO. The Coach**
**House 6-8 Swakeleys Roadoad**
**Ickenham Uxbridge Middlesex UB10 8BZ(GB)**

(54) Filter assembly.

(57) A filter assembly is provided in which a plastics tubular housing (21) is connected to a plastics end cap (24) by a hot plate welding method. The ends of the plastics housing are heated and shaped in a die to form respective end flanges (41) which are then welded to the associated end caps (24). This has been found to provide a join which is capable of resisting operating pressures and so allows the housing (21) and end caps (24) to be formed inexpensively and enable them to be disposed of with the filter element (22) when the filter element is no longer usable.

EP 0 408 377 A2

## FILTER ASSEMBLY

The invention relates to filter assemblies.

One type of filter assembly includes a tubular housing containing a filter element and having two ends, respective end caps being provided at said ends and forming a fluid inlet and outlet respectively. It has been customary to make such assemblies reusable by allowing an end cap to be removed, a used filter element extracted and replaced with an unused filter element, before the end cap is replaced. This reusability has been needed because it has not been cost effective to dispose of the housing and the end caps with the used filter element.

It has recently been proposed, however, to provide such a filter assembly in which the complete assembly is disposable once the filter element is no longer usable. This involves redesigning the filter assembly so that it is formed from the minimum number of parts and so that the parts are of materials which are sufficiently inexpensive to make the disposal of the whole filter assembly a feasible proposition.

Such simplification, however, is difficult because it is essential that the housing and the end caps and the connections between, shall not fail in use and so there are problems associated with the use of less expensive parts which are generally weaker than their more expensive counterparts and with the removal of strengthening and reinforcing members.

One solution to this problem is shown in US-A-2179868 in which the tubular housing is surrounded by a metal sheath and sheet metal end caps are permanently secured to the respective ends of the metal sheath. The present invention seeks to provide an alternative solution to this problem.

According to the invention, there is provided a filter assembly comprising a tubular housing of a plastics material containing a filter element and having two ends, respective end caps being provided at said ends and forming a fluid inlet and a fluid outlet respectively, at least one of said end caps being of a plastics material and having a surface welded to a surface of the associated end of the housing to connect the end cap to the housing.

The surface of the associated end of the tubular housing may be provided on a flange formed at said end.

The weld may be a radiant heat weld or hot plate weld.

Preferably both end caps are welded to the associated ends of the housing.

A metal sheath may be provided around the housing to increase the burst strength of the housing.

Said at least one end cap is preferably formed wholly of a plastics material.

According to a second aspect of the invention, there is provided a method of manufacturing a filter assembly comprising forming a tubular housing of a plastics material and two end caps providing a fluid inlet and a fluid outlet respectively, at least one of said end caps being of a plastics material, and then connecting the end caps to respective ends of the tubular housing, said at least one plastics end cap being connected to an associated one of said ends of the tubular housing by a welding process, a filter element being inserted in to the tubular housing before the two end caps are connected.

The tubular housing may be formed with a flange around said one end cap to which said end plate is connected by a hot plate welding process.

The flange may be formed by softening said one end and then moulding said softened end with a dye system to form said flange.

The one end of the tubular housing may be provided with a circumferencial surface lying in a plane normal to the axis of the tubular housing, the associated end cap including a surface in a parallel plane, when the end cap is butted up against the associated end of the tubular housing, the welding process connecting the two surfaces.

Preferably the method includes connecting both end caps to the tubular housing by a welding process.

The following is a more detailed description of one embodiment of the invention, by way of example, reference being made to the accompanying drawings in which is a partial side elevation, with an end in section, of a filter assembly.

The filter assembly comprises a tubular housing 21 of a plastics material containing a filter element 22 of any suitable known kind. Inlet and outlet end caps are provided at the ends of the tubular housing 21. Only the construction of the outlet end cap 24 will be described in detail - but it will be appreciated that the inlet end cap is similarly formed.

The outlet end cap 24 is formed of a plastics material and includes a tube 25 provided at one end with a flange 26. The flange 26 is formed with a thickened stiffening web 27 adjacent to its periphery.

The flange is provided with an annular surface 40 lying in a plane normal to the common axis 33 of the tube at 35 and the housing 21.

The interior of the tube 25 has, extending from the flanged end, a portion 28 of constant diameter succeeded by a frustoconical portion of reducing diameter and terminating in a second constant diameter portion 30. The end of the tube is closed by a head 31. Two diametrically opposed apertures 32 extend through the tube in directions normal to the common axis 33 of the tube 25 and the housing 21.

The exterior of the tube is formed at the head with a constant diameter portion 34 in which is provided a groove 35 receiving an O ring 36. A second constant diameter portion 37 is provided intermediate the head 31 and the flange 26 and is also provided with a groove 38 receiving an O ring 39. The diameter of the two constant diameter portions 34 and 37 is the same.

Between these constant diameter portions 34, 37 the exterior of the tube is of lesser diameter.

The function of these portions 34, 37 and the O-rings 36, 39 is to allow the filter assembly to be connected to a connector of the kind shown in our co-pending UK Patent Application No. 8916058 in which the tube 25 is inserted into a socket provided with an inlet/outlet. The O-rings 36, 39 seal on either side of the inlet/outlet to provide a closed chamber between the apertures 32 and the socket inlet/outlet through which fluid can pass. Axial expansion or contraction of the housing 21 is accommodated by the O-rings 36, 39 sliding in the socket without breaking their seal with the interior of the socket.

The end caps 24 are connected to the housing 21 in the following way.

Initially, the tubular housing 21 has a constant wall thickness along its length. The ends are heated and softened, and placed in a die system to form a flange 41 extending around each end of the housing. The flange 41 projects outwardly from the housing and has an annular end surface 42 lying in a plane normal to the common axis 33 of the housing 21 and the tube 25. Each end surface 42 is then connected to an annular surface 49 on the flanges 26 of a respective one of the end caps 24. This is achieved by a hot plate (platen) weld in the following way.

The housing 21 and one of the end plates 24 are mounted in a machine which aligns the parts and allows them to be butted together and separated. While they are separated, a heated plate (not shown) is applied to the end surface 42 of the tubular housing 21 and, after the flange 41 has been heated the housing 21 and the plate are moved together until the plate contacts the flange 26 on the associated end cap 24.

When both parts have been heated, they are separated, the hot plate is removed, and the two surfaces 40,42 are pressed together to form a weld between them.

The other end cap is similarly connected, with, of course, the filter element 22 being appropriately capped, connected to the end cap and inserted with the end cap.

It has been found that such welds will resist pressures within the filter assembly of up to 7 bar. This is satisfactory for most filtering applications and so by using this construction of filter assembly and this method, the housing and end plates can be constructed wholly from inexpensive plastics materials. This makes it economic to dispose of the whole filter assembly when the filter element 22 is no longer usable.

It may be that in certain filter assemblies, particularly where they are of greater than usual length, the tubular housing wil have a comparatively low burst strength. In order to increase this, a tubular metal sheath (not shown) may be provided around the exterior of the housing 21.

It will be appreciated that it is not necessary to connect both end caps by the method described above. Only one such end cap may be connected in this way and the other end cap connected in a known fashion. Further, the annular surfaces 40, 42 need not be normal to the common axis 33 of the tube and the housing, they could be arranged in any convenient way. The end caps need not be wholly of plastics material they could be only partially of plastics material.

Further, although the tube 25 is preferably coaxial with the axis of the housing 21, it need not be coaxial. The flange 41 formed at the ends of the housing 21 need not be of the shape shown, it could be of any convenient shape.

It will be appreciated that the sealing means on the tube 25 need not be formed by O-rings 36, 39. Any suitable seals could be used.

The tubes 25 of the filter assembly 12 or at least one of each pair of tubes 25, could be provided with a vent to allow the associated filter assembly 12 to be vented when it is first installed.

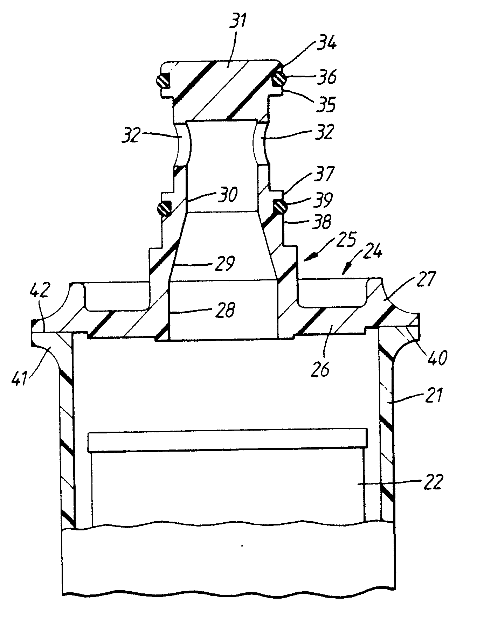

## Claims

1. A filter assembly comprising a tubular housing (21) of a plastics material containing a filter element (22) and having two ends, respective end caps (24) being provided at said ends and forming a fluid inlet and a fluid outlet respectively, at least one of said caps (24) having a surface (40) of a plastics material welded to a surface (42) of the associated end of the housing (21) to connect the end cap (24) to the housing (21).

2. A filter assembly according to claim 1 characterized in that the surface (42) of the associated end of the tubular housing (21) is provided on a flange (41) formed at said end.

3. A filter assembly according to claim 1 or claim 2 characterized in that the weld is a radiant heat weld or hot plate weld.

4. A filter assembly according to any one of claims 1 to 3 characterized in that both end caps (24) are welded to the associated ends of the housing (21).

5. A filter assembly according to any one of claims 1 to 4 characterized in that a metal sheath is provided around the housing (21) to increase the burst strength of the housing (21).

6. A filter assembly according to any one of claims 1 to 5 characterized in that said at least one end cap (24) is formed wholly of a plastics material.

7. A method of manufacturing a filter assembly comprising forming a tubular housing (21) of a plastics material and two end caps (24) providing a fluid inlet and a fluid outlet respectively, at least one of said end caps (24) having a surface (40) of a plastics material, and then connecting the end caps (24) to respective ends of the tubular housing (21), said at least one end cap (24) being connected to an associated one of said ends of the tubular housing (21) by a weld between said plastics surface (40) and said tubular housing (21), a filter element (22) being inserted in to the tubular housing before the two end caps (24) are connected.

8. A method according to claim 7 characterized in that the tubular housing (21) is formed with a flange (41) around said one end to which said end cap surface (40) is connected by a hot plate welding process.

9. A method according to claim 8 characterized in that the flange (41) is formed by softening said one end and then moulding said softened end with a die system to form said flange (41).

10. A method according to any one of claims 7 to 9 characterized in that the one end of the tubular housing is provided with a circumferential surface (42) lying in a plane normal to the axis of the tubular housing (21), the associated end cap surface (40) lying in a parallel plane, when the end cap (24) is butted up against the associated end of the tubular housing (21), the welding process connecting the two surfaces (41,42).